# EUROPÄISCHE PATENTSCHRIFT

(11) **EP 0 563 706 B1**
(45) Veröffentlichungstag und Bekanntmachung des Hinweises auf die Patenterteilung: **17.04.1996**
(21) Anmeldenummer: 93104553.8
(22) Anmeldetag: 19.03.1993
(51) Int. Cl.: F16L 55/027

(54) **Schalldämpfender Resonator für Rohrleitungen**
Sound dampening resonator for pipelines
Résonateur atténuant le son pour tuyauteries

(30) Priorität: 01.04.1992 DE 4210786
(43) Veröffentlichungstag der Anmeldung: 06.10.1993
(73) Patentinhaber: BAYER AG, D-51368 Leverkusen (DE)
(72) Erfinder: Strassen, Werner, Dipl.-Ing., W-4030 Ratingen (DE); Fischer, Andreas, W-4047 Dormagen 11 (DE); Graefenstedt, Michael, Dr., W-5060 Bergisch Gladbach (DE)

(56) Entgegenhaltungen:
- EP-A- 0 019 855
- FR-A- 2 451 530
- US-A- 1 874 326

## Beschreibung

Die Erfindung geht aus von einer Vorrichtung zur Dämpfung von Geräuschen oder Einzeltönen in einer Rohrleitung und beruht auf einer über mindestens eine Öffnung an die Rohrleitung angekoppelten Resonatorkammer mit einer die Resonatorkammer von der Rohrleitung trennenden Begrenzungswand.

Rohrleitungen im Sinne der vorliegenden Erfindung sind ummantelte Räume mit gegenüber ihrer Längsabmessung kleinen Querabmessungen (Lüftungskanäle, Abgasrohre, Kamine etc.).

Es sind, beispielsweise aus Schmidt, Helmut: Schalltechnisches Taschenbuch; 4. Auflage, Düsseldorf, 1989, verschiedene Resonatortypen zur Schalldämpfung in Rohrleitungen und Kanälen bekannt. Für die praktische Anwendung kommen zwei prinzipielle Ausführungsformen in Frage, die entweder auf Abzweigungen an oder von Querschnittsveränderungen in der Rohrleitung beruhen. Ein gebräuchlicher Resonatortyp ist z.B. der Helmholtz-Resonator, der im Prinzip aus einem Hohlraum besteht, der in der Regel durch eine oder mehrere kreisförmige Öffnungen mit der zu dämpfenden Leitung verbunden ist. Die Öffnungen sind dabei gleichmäßig bzw. symmetrisch über die gemeinsame Fläche zwischen Kammer und Rohrleitung verteilt. Nachteilig ist, daß die Dämpfungswirkung eines Helmholtz-Resonators weitgehend auf den Bereich um eine einzige Frequenz, der Resonanzfrequenz des Systems, beschränkt bleibt. In den restlichen Frequenzbereichen liegt eine wesentlich geringere Pegelminderung vor.

Ein abgewandelter Vertreter dieses Resonatortyps ist der sogenannte Lochresonator. Er besteht im wesentlichen aus einem Hohlraum, der durch eine perforierte Platte mit einem gewissen Lochflächenanteil vom zu bedämpfenden Raum getrennt ist.

Bekannt ist ferner der sogenannte Pfeifenresonator.

Die Wirkungsweise eines Pfeifenresonators beruht auf Interferenzen zwischen der ankommenden Schallwelle in der Rohrleitung und einer reflektierten Schallwelle. Die Reflexion tritt beispielsweise in an die Rohrleitung angekoppelten Rohrstücken oder an Räumen mit gegenüber der Rohrleitung großen Querschnittsänderungen auf, in die die Rohrleitung noch hineinragt. Die dämpfende Wirkung der Interferenzerscheinungen ist dabei abhängig von der Länge der angekoppelten Rohrleitung bzw. der Länge, mit der die Rohrleitung noch in den Raum mit vergrößertem Querschnitt hineinragt. Die maximale Dämpfung eines solchen Pfeifenresonators liegt bei einer Wellenlänge, die dem Vierfachen der Länge des angekoppelten Rohres bzw, des hineinragenden Teiles der Rohrleitung entspricht (λ/4-Pfeife). Weitere Dämpfungsbereiche liegen bei dem ungeradzahligen Vielfachen von dem so gegebenen λ/4 . λ stellt dabei die Wellenlänge der Schallwelle im Ausbreitungsmedium in der Rohrleitung dar.

Zum genauen Festlegen der Länge 1/4 λ muß berücksichtigt werden, daß sich die physikalische Rohrlänge für die Luftschwingung um eine gewisse Strecke verlängert. Daher wird die physische Rohrlänge eines solchen Pfeifenresonators um eine Mündungskorrektur verkürzt.

Der Nachteil der beschriebenen Resonatoren besteht darin, daß sie lediglich bei einzelnen bzw. diskreten (Resonanz-)Frequenzen eine wirksame Geräuschdämpfung erzielen. Zudem verursachen Resonatoren, die auf dem Prinzip der plötzlichen Rohrquerschnittsänderung basieren, einen hohen Druckverlust innerhalb der Leitung.

Es wurden bereits Schalldämpfer, insbesondere für die Automobilindustrie, entwickelt, die aus mehreren hintereinandergeschalteten Resonatoren mit abgestufter Größe bestehen und über Öffnungen an die zu bedämpfende Rohrleitung angekoppelt sind (s. US-A-1 874 326). Die Abstufung wird dabei so gewählt, daß der Frequenzdurchlaßbereich einer Stufe in den Frequenzdämmungsbereich der nachfolgenden Stufen fällt, so daß insbesondere die hochfrequenten Anteile der Schallquelle unterdrückt werden können. Nachteilig ist dabei, daß zur Bedämpfung eines breiteren Frequenzbandes eine große Zahl von Resonatoren erforderlich ist, so daß ein Schalldämpfer dieser Art nur mit einer relativ großen Baulänge zu realisieren ist.

Es bestand daher die Aufgabe, eine möglichst einfach aufgebaute Vorrichtung zur Schalldämmung an Rohrleitungen mit einer möglichst kleinen Baulänge zu entwickein, die bei minimierten Druckverlusten innerhalb der Leitung eine möglichst breitwandige Wirkung erzielt.

Zusätzlich bestand die Aufgabe darin, einen Schalldämpfer zu entwickeln, der auch in Rohrleitungen, durch die z.T, auch mit korrosiven Stoffen verunreinigte Gasgemische geleitet werden, hohe Standzeiten besitzt.

Diese Aufgabe wird, ausgehend von der eingangs beschriebenen Vorrichtung, erfindungsgemäß dadurch gelöst, daß die Begrenzungswand aus zwei Längenabschnitten besteht, von denen der eine öffnungslos ist und so bemessen ist, daß er einen λ/4-Pfeifenresonnator bildet, wobei λ die Wellenlänge einer Frequenz im mittleren Bereich des zu dämpfenden Schallspektrums ist und daß die Begrenzungswand innerhalb des zweiten Längenabschnitts, dessen Länge das 0,2 bis 0,6-fache der Begrenzungswandlänge 1 beträgt, die eine Öffnung oder in Längsrichtung gleichmäßig verteilte Öffnungen aufweist und in diesem Bereich einen Helmholz-Resonator bildet, wobei die Verteilung der Öffnung bzw. Öffnungen einer bei 1/2 senkrecht zur Begrenzungswand gedachten Mittelebene unsymetrisch ist und der Öffnungsflächenanteil der Begrenzungswand 0,02 bis 30 % der Mantelfläche pro Längeneinheit der Begrenzungswand beträgt.

Eine einzelne Öffnung ist gleichmäßig verteilt im Sinne der Erfindung, wenn sie etwa mittig in dem Bereich liegt oder schlitzförmig ausgebildet ist und in Längsrichtung verläuft.

Der Resonator besteht also im wesentlichen aus einer Kammer, die an die Rohrleitung grenzt bzw. durch die die Rohrleitung geführt wird. Dabei ist die Rohrleitung auf einer Länge, die 1/5 bis 2/3, bevorzugt 0,4 bis 0,6 der Länge der Kammer entspricht, durch eine Wandung vollständig von der Kammer getrennt. Dabei weist die Wandung das gleiche Flächengewicht und die gleichen akustischen Eigenschaften wie die Ummantelung der Rohrleitung auf, d.h. sie besteht bevorzugt aus dem gleichen Material wie diese. An diesen Bereich anschließend weist die Begrenzungsfläche zwischen Rohrleitung und Kammer eine sich relativ zu den Wellenlängen der Schallwellen plötzlich ändernde Flächendichte auf. Diese Flächendichte kann durch den Einsatz eines zur Rohrwandung unterschiedlichen Materials eingestellt werden, das dann auch unterschiedliche akustische Eigenschaften besitzt. Sie kann aber auch eingestellt werden, indem in die Begrenzungsfläche Öffnungen wie Bohrungen oder im wesentlichen in Richtung der Rohrleitung verlaufende Schlitze angebracht werden, deren Lochfläche zwischen 0,02 und 30 % der Mantel fläche pro Einheitslange beträgt. Dabei verringert sich das Flächengewicht dieses Bereiches der Begrenzungsfläche, da es sich aus Lochflächen und dem Flächengewicht der Wandung gemittelt ergibt.

Die Öffnungen werden bevorzugt abgedeckt. Wenn das Abdeckmaterial andere akustische Eigenschaften besitzt als der Rest der Wandung, so wird die Dämmungswirkung nicht erheblich verschlechtert und im Gegenzug der Strömungswiderstand der Rohrleitung weiter verringert.

Die Strecke, die die Rohrleitung öffnungslos in die sie umgebende Kammer hineinragt bzw. an die Kammer grenzt, bemißt sich im wesentlichen nach der Auslegung eines λ/4-Pfeifenresonators. Die Strecke wird also so dimensioniert, daß sie unter Berücksichtigung der Mündungskorrektur 1/4 Wellenlange einer Frequenz im mittleren Bereich des zu dämpfenden Spektrums beträgt. Im Unterschied zum Pfeifenresonator folgt jedoch nach der λ/4Pfeife kein ungehinderter Querschnittssprung, d.h. eine abrupte, vollständige Öffnung in den Resonator. Bei der vorliegenden Erfindung bleibt die Rohrleitung bis auf einen Öffnungsflächenanteil von 0,02 bis 30 %, bevorzugt 0,02 bis 10 % pro Längeneinheit der Begrenzungsfläche abgedeckt. Da dieser Teil des Resonators als Helmholtz-Resonator wirkt, lassen sich mit geeigneter Dimensionierung weitere Resonanzfrequenzen festlegen, bei denen die Dämpfung ebenfalls vergrößert ist. Daher wird der neue Schalldämpfer im folgenden auch als Helmholtz-Pfeife bezeichnet.

Der Schalldämpfer erzielt eine besonders gute Wirkung im Bereich zwischen 50 und 1000 Hz, insbesondere zwischen 50 und 600 Hz. Durch die weitgehende Abdeckung des Resonatorvolumens von der Rohrleitung lassen sich Druckverluste bis auf 1/10 und weniger gegenüber bekannten Schalldämpfern gleicher akustischer Wirkung reduzieren. Als Resonanzschalldämpfer weist der Resonator keine offenporigen Werkstoffe, z.B. Mineralwolle, auf, die im Laufe des Betriebes verschmutzen könnten. Der Resonator ist in einfacher Weise mit einer bereits vorhandenen Rohrleitung zu koppeln. Es ist dazu ausreichend, die Rohrleitung durch entsprechende Öffnungen (z.B. Bohrungen, Schlitze) zu präparieren und die Kammer fest mit der Rohrleitung zu verbinden. Somit bietet der Resonator auch eine kostengünstige Alternative zu aufwendigeren Dämpfungsverfahren.

Für Rohrleitungen mit großem Querschnitt (> 50 cm) ist es vorteilhaft, die Rohrleitung im Bereich, in dem schalldämpfende Resonatoren angebracht werden sollen, durch eine oder mehrere Trennwände zu unterteilen. Die so entstehenden Leitungen kleineren Querschnitts werden dann wie unabhängige Leitungen mit dem neuen Schalldämpfer versehen. Die Zahl und Lage der Resonanzfrequenzen, auf denen der neue Dämpfer pegelmindernd wirkt, läßt sich durch geeignete Geometrie der Resonatorkammer einstellen.

Enthält das Gasgemisch in der zu dämpfenden Leitung keinen oder nur einen geringen Anteil an Schmutzpartikeln oder korrosiven Stoffen, so kann das Kammer-volumen zur weiteren Schalldämmung auch mit geeignetem Material wie Stein-/Mineralwolle ganz oder teilweise gefüllt sein.

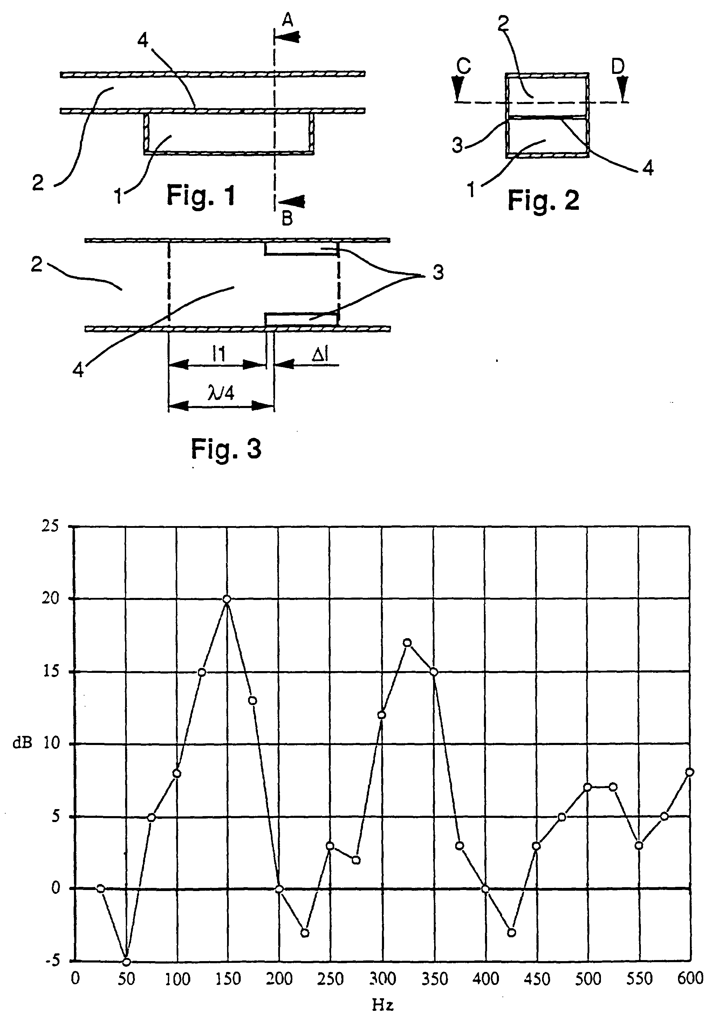

Im folgenden wird der Resonator anhand der Zeichnung beispielhaft erläutert. Dabei zeigen
- Fig. 1, Fig. 2 und Fig. 3: eine Ausführungsform des Resonators im Längs-, Querschnitt und Horizontalschnitt,
- Fig. 5 und Fig. 6: zeigen eine weitere Ausführungsform im Quer- und Längsschnitt,

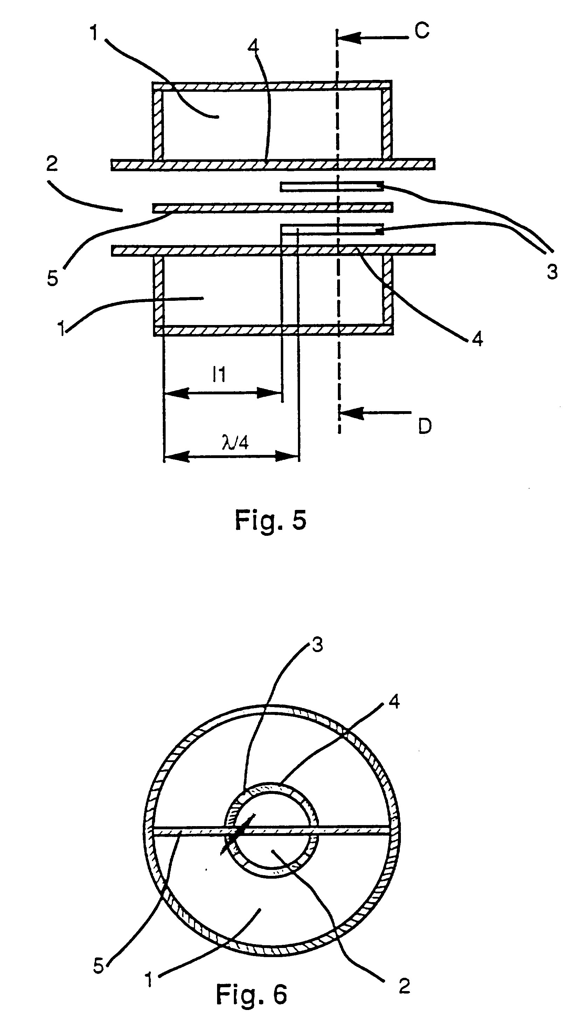

- Fig. 4: zeigt das Durchgangsdämmaß in dB (nach VDI 2567) einer Ausführungsform des neuen Schalldämpfers über einen Frequenzbereich von 50 bis 500 Hz.

Die Helmholtz-Pfeife besteht aus einer Kammer 1 der Länge l, die die Rohrleitung teilweise oder vollständig umgibt. Die Rohrleitung ragt dabei, ohne Öffnungsflächen zur Resonatorkammer 1 aufzuweisen, auf eine Länge l₁, die bis auf eine kleine Strecke Δl (Mündungskorrektur) 1/4 der Wellenlänge entspricht, in deren Umgebung ein Maximum der Dämpfung erzielt werden soll, in die Resonatorkammer 1. Der exakte Wert der Mündungskorrektur hängt von der Art und Form der Öffnungen sowie der Kammergeometrie ab, Nach der Strecke l1 beginnt der Bereich der Kammerwand 4, der mit Öffnungen 3 versehen ist. Dabei weist die Rohrleitung 2 zwei Öffnungen 3 zur Resonatorkammer 1 auf, Das Diagramm (Fig. 4) zeigt die breitbandige Wirkung eines solchen Resonators im Bereich zwischen 50 und 600 Hz. Dabei werden zwei relative Dämpfungsmaxima (150 Hz, 325 Hz) erkennbar.

Die Figuren 5 und 6 zeigen eine größere Rohrleitung mit rundem Querschnitt, Die Rohrleitung 2 und die Kammer 1 sind durch ein eingefügtes Blech 5 in unabhängige Hälften geteilt. Jede der Kammerhälften 1 steht über zwei Schlitze 3 mit der Rohrleitung 2 in Verbindung.

## Patentansprüche

1. Vorrichtung zur Dämpfung von Geräuschen oder Einzeltönen in einer Rohrleitung (2), bestehend aus einer über mindestens eine Öffnung (3) an die Rohrleitung (2) angekoppelten Resonatorkammer (1) mit einer die Resonatorkammer (1) von der Rohrleitung (2) trennenden Begrenzungswand (4) der Länge l, dadurch gekennzeichnet, daß die Begrenzungswand (4) aus zwei Längenabschnitten besteht, von denen der eine öffnungslos ist und so bemessen ist, daß er einen λ/4- Pfeifenresonator bildet, wobei λ die Wellenlänge einer Frequenz im mittleren Bereich des zu dämpfenden Schallspektrums ist und daß die Begrenzungswand (4) innerhalb des zweiten Längenabschnitts, dessen Länge das 0 2 bis 0,6-fache der Begrenzungswandlänge l beträgt, die eine Öffnung oder in Längsrichtung gleichmäßig verteilten Öffnungen (3) aufweist und in diesem Bereich einen Helmholtz-Resonator bildet, wobei die Verteilung der Öffnungen bezüglich einer bei l/2 senkrecht zur Begrenzungswand gedachten Mittelebene unsymmetrisch ist und der Öffnungsflächenanteil der Begrenzungswand (4) 0,02 bis 30 % der Mantelfläche pro Längeneinheit der Begrenzungswand (4) beträgt.

2. Vorrichtung nach Anspruch 1, dadurch gekennzeichnet, daß der Öffnungsflächenanteil der Begrenzungswand (4) 0,02 bis 10 % der Mantelfläche pro Längeneinheit der Begrenzungswand (4) beträgt.

3. Vorrichtung nach Anspruch 1 - 2, dadurch gekennzeichnet, daß die Begrenzungswand (4) aus dem gleichen Material wie die Rohrleitung (1) besteht.

4. Vorrichtung nach Anspruch 1 - 3, dadurch gekennzeichnet, daß die Rohrleitung (2) in dem durch die Länge 1 der Begrenzungswand (4) definierten Teilstück durch Trennwände (5) in mehrere Rohrleitungen (1) verkleinerten Querschnittes unterteilt ist.

5. Vorrichtung nach Anspruch 1 - 4, dadurch gekennzeichnet, daß die Kammer (1) ganz oder teilweise mit schalldämmendem Material gefüllt ist.

## Claims

1. A device for the attenuation of noises or individual sounds in a pipeline (2) comprising a resonator chamber (1) coupled to the pipeline (2) via at least one opening (3) and having a boundary wall (4) which separates the resonator chamber (1) from the pipeline (2) and possesses the length 1, characterised in that the boundary wall (4) consists of two longitudinal sections of which one has no openings and is dimensioned such that it forms a λ/4 whistle resonator, where λ is the wavelength of a frequency in the middle range of the sound spectrum to be attenuated, and that within the second longitudinal section, the length of which amounts to 0.2 to 0.6 times the length 1 of the boundary wall, the boundary wall (4) exhibits the one opening or the openings (3) uniformly distributed in the longitudinal direction and in this region forms a Helmholtz resonator, where the distribution of the opening or openings is asymmetrical relative to an imaginary central plane at 1/2 perpendicular to the boundary wall and the opening surface portion of the boundary wall (4) amounts to 0.02 to 30% of the outer surface per unit of length of the boundary wall (4).

2. A device as claimed in Claim 1, characterised in that the opening surface portion of the boundary wall (4) amounts to 0.02 to 10% of the outer surface per unit of length of the boundary wall (4).

3. A device as claimed in Claim 1-2, characterised in that the boundary wall (4) is composed of the same material as the pipeline (1).

4. A device as claimed in Claim 1-3, characterised in that in the sub-portion defined by the length 1 of the boundary wall (4) the pipeline (2) is divided by partition walls (5) into a plurality of pipelines (1) of reduced cross-section.

5. A device as claimed in Claim 1-4, characterised in that the chamber (1) is filled entirely or partially with sound attenuating material.

## Revendications

1. Dispositif pour l'amortissement de bruits ou de sons individuels dans une tuyauterie (2), constitué par une chambre de résonateur (1) accouplée via au moins une ouverture (3) à la tuyauterie, comportant une paroi de délimitation (4) de la longueur ℓ et séparant la chambre de résonateur (1) de la tuyauterie (2), caractérisé en ce que la paroi de délimitation (4) est constituée par deux tronçons longitudinaux dont l'un est sans ouverture et dimensionné de telle sorte qu'il forme un résonateur à sifflet λ/4, λ, étant la longueur d'onde d'une fréquence dans la plage médiane du spectre sonore à amortir, et en ce que la paroi de délimitation (4) présente, à l'intérieur du second tronçon longitudinal dont la longueur représente 0,2 à 0,6 fois la longueur ℓ de la paroi de délimitation, une ouverture ou des ouvertures (3) réparties à distances égales en direction longitudinale et forme dans cette région un résonateur de Helmholtz, la répartition de l'ouverture ou des ouvertures n'étant pas symétrique par rapport à un plan médian imaginaire à ℓ/2 perpendiculairement à la paroi de délimitation, et la proportion de surface d'ouverture de la paroi de délimitation (4) s'élève à une valeur entre 0,02 et 30 % de la surface enveloppe par unité de longueur de la paroi de délimitation (4).

2. Dispositif selon la revendication 1, caractérisé en ce que la proportion de surface d'ouverture de la paroi de délimitation (4) représente 0,02 à 10 % de la surface enveloppe par unité de longueur de la paroi de délimitation (4).

3. Dispositif selon l'une ou l'autre des revendications 1 et 2, caractérisé en ce que la paroi de délimitation (4) est constituée du même matériau que la tuyauterie (1).

4. Dispositif selon l'une quelconque des revendications 1 à 3, caractérisé en ce que la tuyauterie (2) est subdivisée par des parois de séparation (5), dans la partie définie par la longueur de la paroi de délimitation (4), en plusieurs tuyauteries (1) réduites en section transversale.

5. Dispositif selon l'une quelconque des revendications 1 à 4, caractérisé en ce que la chambre (1) est remplie entièrement ou partiellement par un matériau amortissant le bruit.
